# FASCICULE DE BREVET EUROPEEN

(11) **EP 3 016 078 B1**
(45) Date de publication et mention de la délivrance du brevet: **16.08.2017**
(21) Numéro de dépôt: 15306710.3
(22) Date de dépôt: 26.10.2015
(51) Int. Cl.: G07C 9/00, G08B 25/00

(54) **PROCÉDÉ DE DÉTECTION, DE RECONNAISSANCE, ET DE DÉSARMEMENT AUTOMATIQUE D'UNE CENTRALE D'ALARME, ET SYSTÈME D'ALARME CONVENANT À SA MISE EN OEUVRE**
VERFAHREN ZUR ERFASSUNG, ERKENNUNG UND AUTOMATISCHEN ABSCHALTUNG EINER ALARMZENTRALE, UND ALARMSYSTEM, DAS SICH FÜR SEINE UMSETZUNG EIGNET
METHOD FOR DETECTING, IDENTIFYING AND AUTOMATICALLY DISARMING AN ALARM UNIT, AND ALARM SYSTEM SUITABLE FOR CARRYING OUT SAID METHOD

(30) Priorité: 29.10.2014 FR 1460378
(43) Date de publication de la demande: 04.05.2016
(73) Titulaire: Radio Systèmes Ingénierie Vidéo Technologies Société par actions simplifiée, 67200 Strasbourg (FR)
(72) Inventeur: REIBEL, Jean-Michel, 67450 LAMPERTHEIM (FR)
(74) Mandataire: Nuss, Laurent

(56) Documents cités:
- EP-A1- 2 287 812
- WO-A1-2008/031191
- US-A1- 2009 289 793

## Description

La présente invention concerne le domaine des alarmes permettant la surveillance des espaces protégés situés dans des bâtiments ou des édifices, et a pour objet un procédé de détection, de reconnaissance, et de désarmement automatique d'une centrale d'alarme et un système d'alarme convenant à la mise en oeuvre dudit procédé.

On connaît déjà des systèmes d'alarme comprenant une centrale d'alarme alimentée par une source d'énergie autonome ou par le réseau électrique et reliée par voie filaire ou sans fil (radio fréquence) à au moins un lecteur de badge situé au niveau de la porte. Le lecteur comporte généralement un clavier de sorte à permettre la saisie d'un code personnel d'identification destiné à être authentifié par la centrale en étant comparé à une liste de codes d'identification autorisés mémorisés dans cette dernière.

Lorsque le code est reconnu par la centrale d'alarme, le système commande la procédure de désarmement de la centrale d'alarme qui consiste à effectuer plusieurs opérations telles que, par exemple : indiquer à certains éléments du système le changement d'état, modifier la signalisation des voyants qui passent par exemple du rouge au vert, afficher un message sur l'écran du clavier, communiquer avec un centre de télésurveillance ou encore enregistrer l'évènement dans le journal du système. Lorsque le code d'identification n'est pas reconnu par la centrale, celle-ci génère alors une procédure d'alarme qui consiste généralement à déclencher une alarme sonore et/ou une alarme sous la forme d'une procédure d'intervention directement sur le site protégé ou à distance.

De tels systèmes comprennent généralement un moyen d'armement manuel tel qu'une clé ou un code permettant à l'utilisateur d'armer la centrale lorsqu'il quitte l'espace protégé.

On connaît également d'autres systèmes d'alarme qui évitent à l'utilisateur d'entrer un code à l'aide du clavier de touches du lecteur, en insérant ou en glissant un badge individuel, contenant dans sa mémoire un code d'identification, dans une fente spécialement prévue dans le lecteur ou en présentant un badge sans contact ou badge transpondeur à proximité du lecteur.

Le lecteur de badge sans contact est communément appelé lecteur de proximité et est conçu pour communiquer, grâce à un émetteur/récepteur de proximité, avec le badge transpondeur par radiofréquence et pour émettre un signal d'interrogation en direction dudit badge transpondeur, situé dans son champ de communication, c'est-à-dire son champ de rayonnement, à une distance appropriée. Le badge transpondeur, après avoir reçu le signal d'interrogation provenant du lecteur, est conçu pour pouvoir émettre en retour un signal d'identification à destination du lecteur de proximité en exploitant l'énergie contenue dans le signal d'interrogation.

Par la suite, le lecteur de proximité transmet, grâce à un module de communication, le signal d'identification à la centrale d'alarme qui génère une procédure d'alarme telle que celle décrite précédemment, si le signal d'identification n'est pas authentifié et validé par la centrale.

Une telle technologie de lecture à distance d'un badge transpondeur est bien connue sous le nom de technologie RFID, abréviation du terme anglais «Radio Fréquency Identification». Ce type de badge est du type « passif », c'est-à-dire qu'il ne comprend pas de source d'énergie.

Toutefois, cette technologie nécessite des courants importants pour obtenir une zone de couverture efficace du lecteur de proximité. En effet, le lecteur de proximité doit être activé en permanence ou périodiquement pour être en service lorsqu'un badge transpondeur se trouve à proximité, dans son champ d'émission, avec un temps de réaction plus ou moins court selon l'application. Le lecteur de proximité doit donc être connecté à une source d'énergie permanente et conséquente, notamment de type secteur.

En outre, la consommation énergétique du lecteur de proximité n'est pas restreinte à ses échanges avec des badges transpondeurs mais peut résulter également des différentes communications entre ledit lecteur de proximité et la centrale d'alarme.

La consommation d'énergie électrique du lecteur de proximité est donc un problème crucial lorsque celui-ci doit être rendu autonome, avec sa propre source d'énergie, ceci afin d'éviter tout câblage électrique du lecteur de proximité, notamment avec une alimentation externe de type secteur, et de permettre une installation aisée dudit lecteur de proximité à des endroits stratégiques, notamment au niveau d'une porte d'accès à un espace protégé sous alarme et/ou surveillance anti-intrusion ou à proximité immédiate de cette dernière au moyen d'une centrale d'alarme.

Pour remédier à ce problème, le document EP2287812 décrit un dispositif de détection d'entrée dans un espace protégé d'un habitat et de reconnaissance de badges transpondeurs destiné à coopérer avec une centrale d'alarme et/ou de surveillance anti-intrusion. Le dispositif comprend un lecteur de proximité capable de communiquer avec les badges transpondeurs et situé dans l'espace protégé à proximité immédiate de l'ouverture d'accès. Le lecteur intègre en outre une source autonome d'alimentation en énergie électrique et le dispositif comprend en outre un ensemble de moyens de détection d'entrée ou de passage à travers l'ouverture d'accès et des moyens aptes, lors d'une détection d'entrée, à commander automatiquement l'activation dudit lecteur de proximité et la mise en communication de ce dernier avec la centrale et avec le badge transpondeur présent, ceci en vue de l'établissement d'un transfert de données dans le cadre d'une procédure d'identification et de reconnaissance du badge transpondeur concerné puis, si aucun badge autorisé n'est reconnu et qu'une détection d'entrée est effective, d'une procédure d'alarme et/ou d'intervention par ladite centrale.

Toutefois, si le dispositif du document EP2287812 prévoit une mise en veille du lecteur d'identification à distance économisant l'énergie destinée à son activation lorsqu'aucune entrée ou ouverture de porte n'a été détectée, une fois que le système a été désarmé par une personne identifiée et autorisée à entrer, le lecteur, dans le mode de désarmement de la centrale, continu à être activé à chaque détection d'une nouvelle entrée ou ouverture de porte. Ainsi, par exemple dans le cas d'un garage dans une maison dont la porte est protégée par un tel système, l'ouverture de la porte plusieurs fois dans une journée, lorsque le système est désarmé, entraîne autant de fois l'activation du lecteur, qui est autonome, suite à chaque détection d'ouverture de la porte par le détecteur, et donc une consommation énergétique du lecteur trop importante ne permet pas un fonctionnement autonome de longue durée.

La présente invention a pour but de pallier ces inconvénients en proposant un procédé d'identification, de reconnaissance, et de désarmement automatique d'une centrale d'alarme permettant de limiter la consommation énergétique des éléments autonomes du système convenant à sa mise oeuvre.

A ce titre, la présente invention a pour objet un procédé de détection, de reconnaissance, et de désarmement automatique d'une centrale d'alarme pour la surveillance d'un espace protégé comprenant au moins une ouverture d'accès fermée par une porte, à partir d'un système d'alarme comprenant, d'une part, la centrale d'alarme qui comprend une unité centrale de traitement principale et un module de communication principal est alimentée par une source d'énergie principale autonome ou par le réseau, d'autre part, au moins un ensemble de détection et d'identification autonome relié fonctionnellement à la centrale et étant associé à la ou à l'une des portes, le ou chaque ensemble comprenant une ou deux unités centrales de traitement secondaires, un émetteur/récepteur de proximité capable d'être activé ou mis en état de veille, au moins un capteur de détection capable de détecter une ouverture de la porte associée et/ou un passage à travers cette dernière, un ou deux modules de communication secondaires permettant la communication avec la centrale et une ou deux sources d'énergie secondaires permettant l'autonomie énergétique du ou de chaque ensemble, et, d'autre part encore, au moins un support portable de communication sans fil actif comprenant une puce de communication sans fil, telle qu'une puce Bluetooth de préférence à faible énergie, et une mémoire contenant un identifiant, le ou chaque émetteur/récepteur de proximité activé étant capable d'établir une communication sans fil avec la ou chaque puce pour permettre l'identification du support portable et la reconnaissance de son identifiant par la centrale qui est adaptée, selon que l'identifiant est reconnu ou non, pour, automatiquement, être désarmée ou déclencher une procédure d'alarme.

On entendra, selon l'invention, par « actif » dans « support portable de communication sans fil actif » : un support portable de communication sans fil contenant sa propre source d'énergie permettant son alimentation en énergie pour son fonctionnement.

Un tel procédé se caractérise essentiellement en ce qu'il consiste à réaliser, à partir d'une configuration où le ou chaque émetteur/récepteur de proximité est à l'état de veille et où la centrale est à l'état armé ou désarmé, pour la ou chaque porte concernée, les étapes successives suivantes :
a/ à détecter automatiquement, à partir du ou des capteur(s) de détection, une ouverture de la porte et/ou un passage à travers cette dernière,
b/ suite à ladite détection, en fonction de l'état d'armement, armé ou désarmé, de la centrale :
   . à l'état armé :
      i/ à commander l'activation de l'émetteur/récepteur de proximité concerné pour le mettre automatiquement dans un état activé permettant sa communication sans fil avec le support concerné sur une durée prédéterminée t0,
      ii/ en présence du ou de l'un des supports portables dans le champ de communication radio fréquence de l'émetteur/récepteur de proximité activé, à établir la communication sans fil correspondante pour permettre l'identification du support portable concerné,
      iii/ à transmettre l'identifiant du support portable ainsi présent à la centrale qui, selon l'état de reconnaissance de l'identifiant, effectue soit, lorsque celui-ci est valide, la procédure de désarmement du système soit, en absence d'identifiant valide, la procédure d'alarme, éventuellement après un délai de temporisation d'entrée,
      iv/ en l'absence de support reconnu, à commander, à l'expiration de la durée prédéterminée t0, la désactivation de l'émetteur/récepteur de proximité ainsi activé pour le mettre automatiquement à l'état de veille.
   . à l'état désarmé :
      v/ à maintenir automatiquement l'émetteur/récepteur de proximité à l'état de veille en agissant directement ou indirectement sur ce dernier.

La présente invention a également pour objet un système d'alarme, convenant à la mise en oeuvre du procédé, selon la présente invention, d'identification, de reconnaissance, et de désarmement automatique d'une centrale d'alarme, pour la surveillance d'un espace protégé comprenant au moins une ouverture d'accès fermée par une porte, se caractérisant en ce qu'il comprend :
- la centrale d'alarme qui comprend une unité centrale de traitement principale et un module de communication principal et est alimentée par une source d'énergie principale autonome ou par le réseau,
- au moins un ensemble de détection et d'identification autonome relié fonctionnellement à la centrale et étant associé à la ou à l'une des portes, le ou chaque ensemble comprenant une ou deux unités centrales de traitement secondaires, un émetteur/récepteur de proximité capable d'être activé ou mis en état de veille, au moins un capteur de détection capable de détecter une ouverture de la porte associée et/ou un passage à travers cette dernière, le cas échéant le ou chaque capteur de détection étant capable d'être automatiquement activé ou mis en état de veille, un ou deux modules de communication secondaires permettant la communication avec la centrale et une ou deux sources d'énergie secondaires permettant l'autonomie énergétique du ou de chaque ensemble,
- au moins un support portable de communication sans fil actif comprenant une puce de communication sans fil, telle qu'une puce Bluetooth de préférence à faible énergie, et une mémoire contenant un identifiant, le ou chaque émetteur/récepteur de proximité activé étant capable d'établir une communication sans fil avec la ou chaque puce de communication pour permettre l'identification du support portable et la reconnaissance de son identifiant par la centrale qui est adaptée, selon que l'identifiant est reconnu ou non, pour, automatiquement, être désarmée ou déclencher une procédure d'alarme,
et en ce que la centrale ou, le cas échéant, le ou chaque ensemble, est prévu(e) pour permettre automatiquement, suite à la détection par le ou les capteur de détection, d'une part, à l'état armé de la centrale, la commande de l'activation de l'émetteur/récepteur de proximité concerné, tel que défini dans l'étape b/i/ du procédé selon l'invention, et, d'autre part, à l'état désarmé de la centrale, le maintien, tel que défini dans l'étape b/v/ dudit procédé, du ou de chaque émetteur/récepteur de proximité à l'état de veille en agissant directement ou indirectement sur ce ou ces derniers, et le ou chaque ensemble comprend des moyens de temporisation permettant la commande automatique, après la durée prédéterminée t0, de la désactivation telle que définie dans l'étape b/iv/ dudit procédé.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

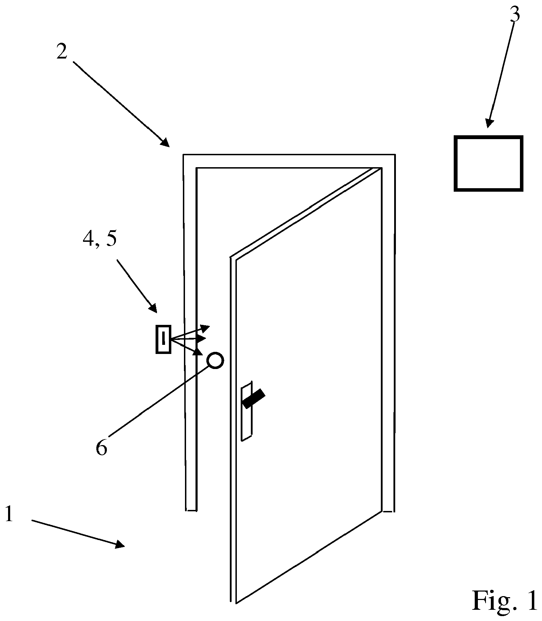

- la figure 1 montre un système d'alarme, selon la présente invention, dans la première forme de réalisation du système concernant l'activation de l'émetteur/récepteur d'un ensemble de détection et d'identification consistant en un détecteur/lecteur autonome installé à proximité d'une porte d'accès d'un espace protégé dans un bâtiment ou un édifice, permettant l'activation de l'émetteur/récepteur de proximité du détecteur/lecteur de façon autonome, c'est-à-dire sans passer par la centrale d'alarme, depuis ledit ensemble,

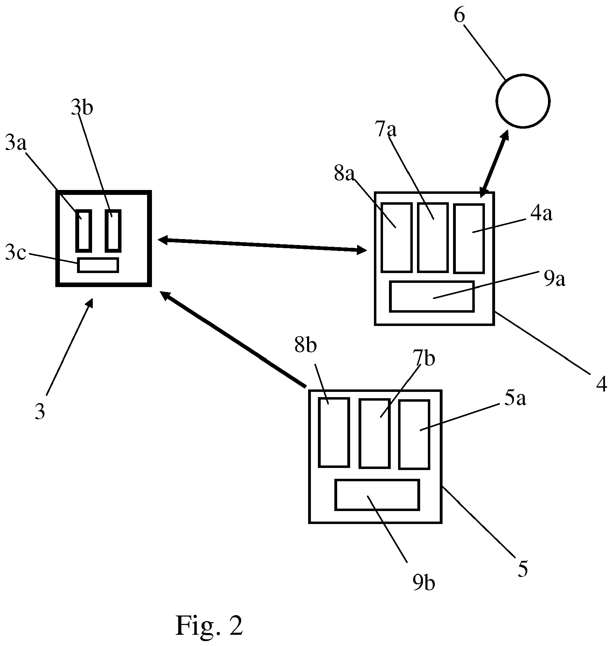

- la figure 2 montre une vue schématique et fonctionnelle du système selon la présente invention, dans la deuxième forme de réalisation du système concernant l'activation de l'émetteur/récepteur d'un ensemble de détection et d'identification consistant en un lecteur et un détecteur autonomes, permettant l'activation de l'émetteur/récepteur de proximité du lecteur de façon centralisée depuis la centrale d'alarme,

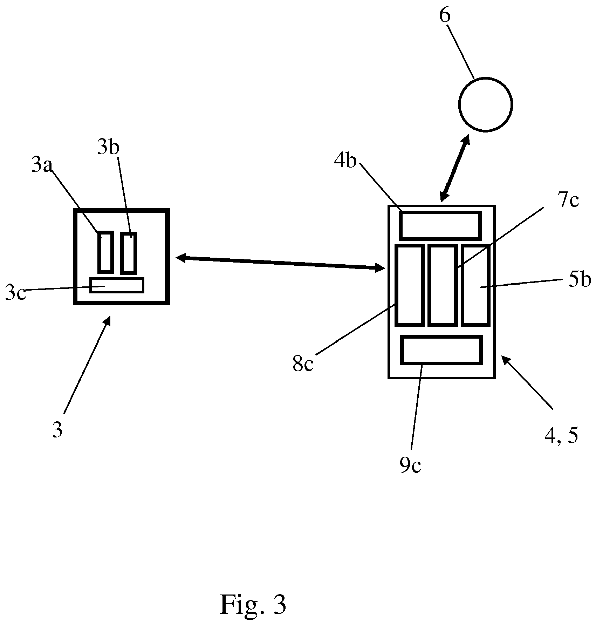

- la figure 3 montre une vue schématique et fonctionnelle du système selon la présente invention représenté sur la figure 1,

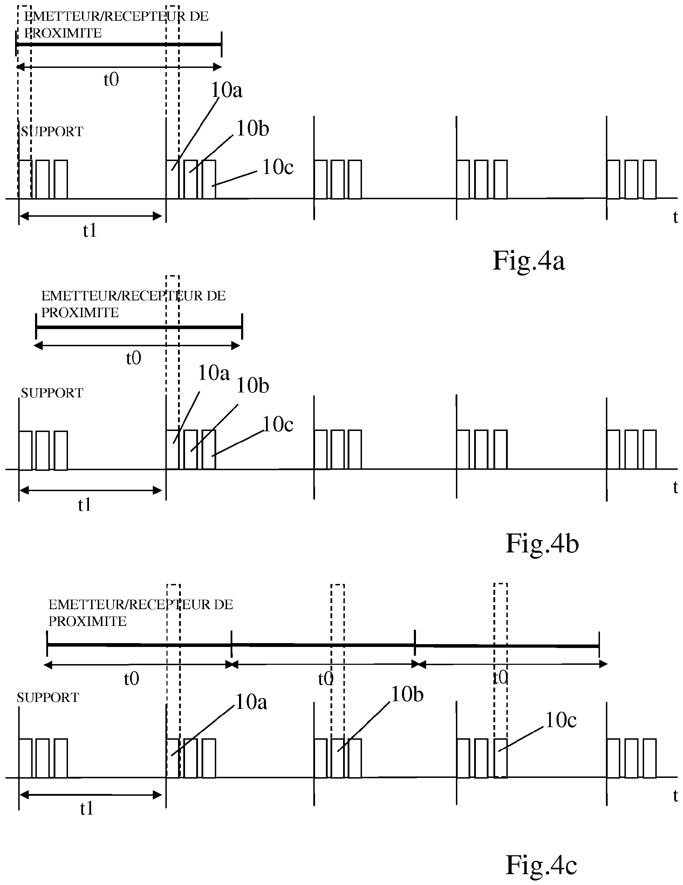

- la figure 4a montre un diagramme des temps faisant apparaître le cycle périodique des émissions par le ou les supports portables du message de signalisation indiquant leur présence et le temps d'activation prédéterminé, suite à la détection d'une ouverture de la porte et/ou d'un passage à travers cette dernière, du ou de chaque émetteur/récepteur de proximité concerné, dans une forme de réalisation préférentielle avec une série de trois canaux de transmission successifs et une utilisation du premier canal de transmission de ladite série par le ou chaque émetteur/récepteur de proximité concerné,
- la figure 4b montre le diagramme de la figure 4a avec un déphasage temporel entre l'émetteur/récepteur de proximité et le support portable situé dans le champ de communication entre ces derniers,
- la figure 4c montre le diagramme de la figure 4a avec une utilisation successive des trois canaux de transmission par le ou chaque émetteur/récepteur de proximité concerné répétant trois fois leur durée d'activation prédéterminée t0.

Les figures montrent un système d'alarme convenant à la mise en oeuvre du procédé selon la présente invention, d'identification, de reconnaissance, et de désarmement d'une centrale 3 d'alarme, pour la surveillance d'un espace protégé 1 comprenant au moins une ouverture d'accès fermée par une porte 2.

Un tel système d'alarme comprend :
- la centrale 3 d'alarme qui comprend une unité centrale de traitement principale 3a et un module de communication principal 3b et est alimentée par une source d'énergie principale autonome 3c ou par le réseau,
- au moins un ensemble de détection et d'identification autonome relié fonctionnellement à la centrale 3 et étant associé à la ou à l'une des portes 2, le ou chaque ensemble comprenant une ou deux unités centrales de traitement secondaires 7a, 7b (figure 2), 7c (figure 3), un émetteur/récepteur de proximité 4a (figure 2), 4b (figure 3) capable d'être activé ou mis en état de veille, au moins un capteur de détection 5a (figure 2), 5b (figure 3) capable de détecter une ouverture de la porte 2 associée et/ou un passage à travers cette dernière, le cas échéant le ou chaque capteur de détection 5a, 5b étant capable d'être automatiquement activé ou mis en état de veille, un ou deux modules de communication secondaires 8a, 8b (figure 2), 8c (figure 3) permettant la communication avec la centrale 3 et une ou deux sources d'énergie secondaires 9a, 9b (figure 2), 9c (figure 3) permettant l'autonomie énergétique du ou de chaque ensemble,
- au moins un support portable 6 de communication sans fil actif comprenant une puce de communication sans fil, telle qu'une puce Bluetooth de préférence à faible énergie, et une mémoire contenant un identifiant, le ou chaque émetteur/récepteur 4a, 4b activé étant capable d'établir une communication sans fil avec la ou chaque puce de communication pour permettre l'identification du support portable 6 et la reconnaissance de son identifiant par la centrale 3 qui est adaptée, selon que l'identifiant est reconnu ou non, pour, automatiquement, être désarmée ou déclencher une procédure d'alarme.

Conformément à la présente invention, la centrale 3 ou, le cas échéant, le ou chaque ensemble, est prévu(e) pour permettre automatiquement, suite à la détection par le ou les capteur de détection 5a, 5b, d'une part, à l'état armé de la centrale 3, la commande de l'activation de l'émetteur/récepteur de proximité 4a, 4b concerné, tel que défini dans l'étape b/i/ du procédé selon l'invention (cf. p. 6,1. 15-25), et, d'autre part, à l'état désarmé de la centrale 3, le maintien, tel que défini dans l'étape b/v/ du procédé selon l'invention (cf. p. 6, 1. 15-25), du ou de chaque émetteur/récepteur de proximité 4a, 4b à l'état de veille en agissant directement ou indirectement sur ce ou ces derniers.

Toujours conformément à la présente invention, le ou chaque ensemble comprend des moyens de temporisation permettant la commande automatique, après la durée prédéterminée t0, de la désactivation telle que définie dans l'étape b/iv/ du procédé selon l'invention (cf. p. 6, 1. 15-25).

Le module de communication principal 3b de la centrale 3 d'alarme peut être prévu pour pouvoir communiquer sans fil par radio fréquence, le cas échéant par voie filaire, avec le ou les modules de communication secondaires 8a, 8b, 8c. A cet effet, le ou chaque module de communication secondaire 8a, 8b, 8c peut être prévu pour pouvoir communiquer sans fil par radio fréquence, le cas échéant par voie filaire, avec le module de communication principal 3b.

On comprendra que, dans le ou chaque ensemble d'un tel système, le ou les capteurs de détection 5a, 5b du ou de chaque ensemble peuvent être reliés fonctionnellement à la ou l'une des unités centrales de traitement secondaires 7a,7b, 7c du même ensemble correspondant.

Le procédé, selon la présente invention, de détection, de reconnaissance, et de désarmement automatique de la centrale 3 d'alarme pour la surveillance de l'espace protégé 1, à partir d'un tel système, consiste à réaliser, à partir d'une configuration où le ou chaque émetteur/récepteur de proximité 4a, 4b est à l'état de veille et où la centrale 3 est à l'état armé ou désarmé, pour la ou chaque porte 2 concernée, les étapes a/ et b/ successives suivantes :
a/ à détecter automatiquement, à partir du ou des capteur(s) de détection 5a, 5b, une ouverture de la porte 2 et/ou un passage à travers cette dernière,
b/ suite à ladite détection, en fonction de l'état d'armement, armé ou désarmé, de la centrale 3 :
   . à l'état armé :
      i/ à commander l'activation de l'émetteur/récepteur de proximité 4a, 4b concerné pour le mettre automatiquement dans l'état activé permettant sa communication sans fil avec le support portable 6 concerné sur une durée prédéterminée t0,
      ii/ en présence du ou de l'un des supports portable 6 dans le champ de communication radio fréquence de l'émetteur/récepteur de proximité 4a, 4b activé, à établir la communication sans fil correspondante pour permettre l'identification du support portable 6 concerné,
      iii/ à transmettre l'identifiant du support portable 6 ainsi présent à la centrale 3 qui selon l'état de reconnaissance de l'identifiant, effectue soit, lorsque celui-ci est valide, la procédure de désarmement du système soit, en absence d'identifiant valide, la procédure d'alarme, éventuellement après un délai de temporisation d'entrée,
      iv/ en l'absence de support portable 6 reconnu, à commander, à l'expiration de la durée prédéterminée t0, la désactivation de l'émetteur/récepteur de proximité 4a, 4b ainsi activé pour le mettre automatiquement à l'état de veille.
   . à l'état désarmé :
      v/ à maintenir automatiquement l'émetteur/récepteur de proximité 4a, 4b à l'état de veille en agissant directement ou indirectement sur ce dernier.

Dans une première forme de réalisation du procédé concernant l'activation du lecteur 4 du ou de chaque ensemble concerné, ledit procédé peut consister, à partir du système (figures 1 et 3) où, d'une part, le ou chaque ensemble peut consister en un détecteur/lecteur 4, 5 pouvant intégrer l'unité centrale de traitement secondaire 7c, le module de communication sans fil secondaire 8c, l'émetteur/récepteur de proximité 4b, le ou les capteurs de détection 5b et la source d'énergie secondaire 9c, l'unité centrale de traitement secondaire 7c du ou de chaque ensemble pouvant être prévue pour pouvoir commander, suite à une détection par le ou les capteurs de détection 5b, l'activation de l'émetteur/récepteur de proximité 4 du même ensemble et, d'autre part, l'unité centrale de traitement principale 3 a de la centrale 3 peut être adaptée pour envoyer à l'unité centrale de traitement secondaire 7c du ou de chaque ensemble un signal d'information représentatif de ou reflétant l'état d'armement, c'est à dire l'état armé ou désarmé, de la centrale 3 :
- préalablement à l'étape b/, à envoyer à l'unité centrale de traitement secondaire 7c du ou de chaque détecteur/lecteur 4,5, le signal d'information représentatif de l'état d'armement de la centrale 3 pour l'informer de l'état d'armement de la centrale 3,
- dans l'étape b/i/, à commander depuis l'unité centrale de traitement secondaire 7c l'activation de l'émetteur/récepteur 4b.

Dans une deuxième forme de réalisation du procédé concernant l'activation du lecteur 4 du ou de chaque ensemble concerné, ledit procédé peut consister, à partir du système (figure 2) où l'unité centrale de traitement principale 3a de la centrale 3 peut être prévue pour pouvoir commander l'activation de l'émetteur/récepteur de proximité 4a du ou de chaque ensemble et où le ou chaque ensemble peut consister, d'une part, en un lecteur 4 pouvant intégrer l'émetteur/récepteur de proximité 4a, l'une des deux unités centrales de traitement secondaires 7a, l'un des deux modules de communication secondaires 8a et l'une des deux sources d'énergie secondaires 9a et, d'autre part, en un détecteur 5 pouvant intégrer l'autre unité centrale secondaire 7b, l'autre module de communication secondaire 8b, le ou les capteurs de détection 5a et l'autre source d'énergie secondaire 9b :
- dans l'étape a/, à envoyer à la centrale 3, depuis le détecteur 5, un signal représentatif de la détection effectuée par le ou les capteurs de détection 5a dudit détecteur 5,
- dans l'étape b/i/, à commander, depuis la centrale 3, l'activation de l'émetteur/récepteur de proximité 4a.

Dans une forme de réalisation préférentielle du procédé concernant la désactivation du lecteur 4 activé du ou de chaque ensemble concerné, celui-ci peut consister dans l'étape b/iv/, à commander la désactivation de l'émetteur/récepteur 4a, 4b depuis la ou l'une des unités centrales de traitement secondaire 7a, 7c du même ensemble.

Par ailleurs, la centrale 3 peut comprendre une mémoire contenant la liste des identifiants valides relatifs aux supports portables 6.

D'autre part, dans une forme de réalisation préférentielle du procédé pour détecter la présence d'éventuels supports portables oubliés dans l'espace protégé après avoir procédé à l'armement de la centrale 3 dans l'état armé, le procédé peut consister à commander, grâce au système, en réponse à l'armement de la centrale 3 dans l'état armé, préalablement à l'étape a/, l'activation de l'émetteur/récepteur 4a, 4b du ou de chaque ensemble, pour mettre automatiquement le ou chaque émetteur/récepteur 4a, 4b dans l'état activé durant une période prédéterminée de sorte à détecter la présence éventuel d'un support portable 6 autorisé dans l'espace protégé 1, puis à commander, après une période prédéterminée, la désactivation du ou de chaque émetteur/récepteur 4a, 4b activé de sorte à le(s) mettre en état de veille, et en ce qu'il consiste dans le cas d'une telle présence à inhiber temporairement le support portable 6 dans la liste des identifiants valides mémorisée dans la centrale 3 jusqu'à son prochain désarmement. La commande de la désactivation, dans cette étape préalable faisant suite à l'armement, automatique ou manuel, de la centrale 3 d'alarme, peut être effectuée depuis la centrale 3 au moyen de son unité centrale de traitement principale 3a, via le module de communication principal 3b.

Si on se réfère maintenant aux figures 4a, 4b, 4c, on peut voir que le procédé peut consister, à l'état armé et à l'état activé du ou de chaque émetteur/récepteur de proximité 4a, 4b, à partir du ou de chaque support portable 6 prévu pour émettre de façon périodique, selon un rythme prédéterminé avec un cycle de durée t1, un message de signalisation indiquant sa présence, ledit message de signalisation étant émis pour chaque cycle sur un ou plusieurs canaux de transmission 10 répétant chacun ledit message, de préférence trois canaux 10a, 10b, 10c, l'utilisation du ou de chaque canal de transmission 10a, 10b, 10c par le ou chaque émetteur/récepteur de proximité 4a, 4b étant effectuée sur la durée prédéterminée t0 :
à définir la durée prédéterminée t0 de l'état activé du ou de chaque émetteur/récepteur de proximité 4a, 4b par rapport à la durée t1 du cycle de sorte que la durée prédéterminée t0 soit strictement supérieure à la durée t1 du cycle t0.

De préférence, le procédé peut consister, dans le cas où le message de signalisation est émis sur au moins deux canaux de transmission 10 utilisés successivement selon un ordre prédéterminé par le ou chaque émetteur/récepteur de proximité 4a, 4b et où aucune communication n'a été établie dans le premier canal de transmission 10a utilisé, à utiliser successivement le ou les autres canaux de transmission 10b, 10c jusqu'à ce qu'une communication soit établie ou jusqu'à ce que le dernier canal de transmission 10c ait été utilisé par le ou chaque émetteur/récepteur de proximité 4a, 4b (figure 4c).

On comprendra ainsi que si en théorie une durée prédéterminée t0 de l'activation du ou de chaque émetteur/récepteur de proximité 4a, 4b pourrait suffire à initier une communication, il se peut cependant que le canal de transmission 10a, 10b, 10c utilisé par ce dernier soit brouillé, par exemple par d'autres usagers de la bande de fréquence radio dudit canal de transmission. Dans ce cas, la présente invention, comme vu précédemment, peut ainsi permettre que le ou chaque émetteur/récepteur de proximité 4a, 4b puisse poursuivre sa durée d'activation t0 en la reproduisant à chaque utilisation successive, le cas échéant, d'un autre canal de transmission (figure 4c). D'autre part, on notera qu'en observant le niveau de signal sur les canaux de transmission 10a, 10b, 10c et en comptabilisant les canaux de transmission présentant le plus de réussite pour l'établissement des communications, le ou chaque émetteur/récepteur de proximité 4a, 4b concerné peut être adapté pour privilégier l'ordre dans lequel il écoutera les canaux de transmissions 10a, 10b, 10c pour réduire la probabilité de brouillage pouvant introduire un retard dans l'établissement de la communication entre ces derniers et les supports portables 6 concernés.

Ainsi, plus particulièrement, le ou chaque support portable 6 peut émettre en permanence, selon un rythme prédéterminé, un message de signalisation indiquant sa présence. Le rythme peut être défini de sorte que la durée du cycle t1 soit, de préférence, supérieure à 0.7 seconde et inférieure à 5 secondes. En effet des essais réalisés par la présente demanderesse ont montré que pour une durée du cycle t1 inférieure ou égale à 0.7 seconde, le rythme de la signalisation devient tellement rapide, que la consommation d'énergie résultante dépasse les 500 mAh par année de fonctionnement, ce qui peut dépasser les possibilités de la source d'énergie du ou de chaque support portable 6. Ces essais ont également montré que pour une durée du cycle t1 supérieure ou égale à 5 secondes, le temps de réponse du système devient très long, sachant que la durée totale d'activation du ou de chaque émetteur/récepteur de proximité 4a, 4b dans le cas d'une pluralité de canaux de transmission trois canaux de transmission est un multiple de t0, par exemple dans le cas de trois canaux est égale à trois fois la durée prédéterminée t0 (figure 4c). Et on rappellera que dans de nombreux systèmes d'alarmes, la temporisation durant laquelle une personne est admise dans la zone protégée avant que l'alarme se déclenche, est fixée à environ 30 secondes, ce qui est censé suffire pour désactiver le système d'alarme, par exemple en entrant un code ou en présentant un badge tel qu'un support portable 6. Idéalement, la durée t1 du cycle peut être comprise entre 1.5 et 3 secondes, ceci de sorte à prévoir de préférence un intervalle de valeurs de t1 permettant d'obtenir le meilleur compromis réactivité/économie d'énergie.

La durée prédéterminée t0 peut être comprise, par exemple, de préférence, entre 1.7 et 4.5 secondes, plus préférentiellement être égale à environ 1.7 secondes. On notera qu'avec une durée d'activation t0 largement supérieure à la durée t1 du cycle d'émission on peut obtenir une probabilité égale à 100% pour la coïncidence émission-réception (zones P en pointillés sur les figures 4a, 4b, 4c), même s'il existe un déphasage temporel (figure 4b) entre le ou chaque émetteur/récepteur de proximité 4a, 4b et le support portable 6 concerné se trouvant dans le champ de ce dernier.

La durée prédéterminée t0 et la durée t1 du cycle peuvent être stockées dans une mémoire que peut comprendre le système, par exemple au niveau de la centrale 3 d'alarme ou du ou de chaque ensemble, ladite mémoire pouvant alors être connectée à l'unité centrale de traitement principale ou à l'une des unités de traitement secondaires, ces dernières étant alors adaptées pour traiter ces valeurs de durée t0 et t1 prédéterminées ainsi mémorisées.

Si on se réfère à aux figures 1 et 3, plus particulièrement à la figure 3, on peut voir que, dans une première forme de réalisation du système concernant l'activation de l'émetteur/récepteur 4b du ou de chaque ensemble, le ou chaque ensemble peut consister en un détecteur/lecteur 4, 5 autonome pouvant intégrer l'unité centrale de traitement secondaire 7c, le module de communication secondaire 8c, l'émetteur/récepteur de proximité 4b, le ou les capteurs de détection 5b et la source d'énergie secondaire 9c. En outre, l'unité centrale de traitement secondaire 7c du ou de chaque ensemble peut être prévue pour pouvoir commander, suite à une détection par le ou les capteurs de détection 5b correspondant(s), l'activation de l'émetteur/récepteur de proximité 4b telle que définie dans l'étape b/i/ du procédé dans sa première forme de réalisation. D'autre part, l'unité centrale de traitement principale 3a de la centrale 3 peut être adaptée pour pouvoir envoyer, via le module de communication principale 3b et le module de communication secondaire 8c correspondant, à l'unité centrale de traitement secondaire 7c du ou de chaque ensemble le signal d'information représentatif de l'état d'armement de la centrale 3 tel que défini dans le procédé dans sa première forme de réalisation.

On comprendra que dans cette première forme de réalisation du système (figures 1 et 3), le ou chaque ensemble peut ainsi former une entité autonome, à savoir le détecteur/lecteur 4, 5. On comprendra également que l'unité centrale de traitement secondaire 7c du détecteur/lecteur 4, 5 du ou de chaque ensemble peut être reliée fonctionnellement aux autres éléments constitutifs du détecteur/lecteur 4, 5 auxquels elle est alors commune, à savoir, notamment, à l'émetteur/récepteur de proximité 4b, au module de communication secondaire 8c, au(x) capteur(s) de détection 5a et à la source d'énergie secondaire 9a permettant leur alimentation autonome.

On entendra par une entité le fait d'utiliser la même carte électronique, ou une connexion de plusieurs cartes électroniques entre elles intégrant les éléments constitutifs du détecteur/lecteur 4, 5 et/ou un même boîtier, non représenté, recevant lesdits éléments. Ainsi, dans cette première forme de réalisation du système, le détecteur/lecteur 4, 5 peut comprendre un boîtier renfermant une carte électronique, le cas échéant une pluralité de cartes électroniques connectées entre elles, intégrant l'unité centrale de traitement secondaire 7c, le module de communication secondaire 8c, l'émetteur/récepteur 4b, le ou les capteurs de détection 5b et la source d'énergie secondaire 9c. Contrairement à la première forme de réalisation du système où le lecteur 4 et le détecteur 5 peuvent être intégrés respectivement dans deux boîtiers distincts, dans la deuxième forme de réalisation, le lecteur 4 et le détecteur 5 peuvent être intégrés dans le même boîtier.

Si on se réfère maintenant à la figure 2, on peut voir que, dans une deuxième forme de réalisation du système concernant l'activation de l'émetteur/récepteur de proximité 4a du ou de chaque ensemble, le ou chaque ensemble peut consister, d'une part, en un lecteur 4 autonome pouvant intégrer l'émetteur/récepteur de proximité 4a, l'une des deux unités centrales de traitement secondaires 7a, l'un des deux de modules de communication secondaire 8a, ce dernier pouvant être bidirectionnel, et l'une des deux sources d'énergie secondaires 9a et, d'autre part, en un détecteur 5 autonome pouvant intégrer l'autre module de communication 8b, le ou les capteurs de détection 5a, l'autre source d'énergie 9b et l'autre unité centrale de traitement secondaire 7b adaptée pour pouvoir envoyer à la centrale 3, c'est-à-dire via le module de communication secondaire 8b correspondant et le module de communication principal 3b, le signal représentatif de la détection tel que défini dans l'étape a/ du procédé dans sa deuxième forme de réalisation. En outre, l'unité centrale de traitement principale 3a de la centrale 3 peut être prévue pour pouvoir commander, via le module de communication principal 3b et le module de communication secondaire 8a correspondant, l'activation de l'émetteur/récepteur de proximité 4a, telle que définie dans l'étape b/i/ du procédé dans sa deuxième forme de réalisation.

On comprendra que dans cette deuxième forme de réalisation du système (figure 2) concernant l'activation de l'émetteur/récepteur de proximité 4a du ou de chaque ensemble, le ou chaque ensemble peut ainsi former deux entités autonomes, à savoir le lecteur 4 et le détecteur 5 et que le ou chaque ensemble peut comprendre un émetteur/récepteur de proximité 4a intégré dans le lecteur 4, deux unités centrales de traitement secondaires 7a, 7b, dont l'une 7a est intégrée dans le lecteur 4 et l'autre 7b dans le détecteur 5, au moins un capteur de détection 5a intégré dans le détecteur 5, deux sources d'énergie secondaires 9a, 9b dont l'une 9a est intégrée dans le lecteur 4 et l'autre 9b dans le détecteur 5, et deux modules de communication secondaires 8a, 8b dont l'un 8a est intégrée dans le lecteur 4 et l'autre 8b dans le détecteur 5. On comprendra également que l'unité centrale de traitement secondaire 7a du lecteur 4 du ou de chaque ensemble peut être reliée fonctionnellement aux autres éléments constitutifs du lecteur 4, à savoir, notamment, à l'émetteur/récepteur 4a, au module de communication secondaire 8a et à la source d'énergie secondaire 9a permettant leur alimentation autonome et que l'unité centrale de traitement secondaire 7b du détecteur 5 du ou de chaque ensemble peut être reliée fonctionnellement aux autres éléments constitutifs du détecteur, à savoir, notamment, au(x) capteur(s) de détection 5a, au module de communication secondaire 8b et à la source d'énergie secondaire 9b permettant leur alimentation autonome.

On entendra par deux entités le fait d'utiliser, dans chaque entité, la même carte électronique, ou une connexion de plusieurs cartes électroniques entre elles intégrant les éléments constitutifs du lecteur 4 ou du détecteur 5 et/ou un même boîtier pour chaque entité, non représenté, recevant lesdits éléments concernés. Ainsi, dans cette deuxième forme de réalisation, pour le ou chaque ensemble, le lecteur 4 peut comprendre un boitier renfermant une carte électronique, le cas échéant une pluralité de cartes électroniques connectées entre elles, intégrant l'émetteur/récepteur 4a, l'une des deux unités centrales de traitement secondaires 7a, l'un des deux modules de communication secondaire 8a et l'une des deux sources d'énergie 9a et le détecteur 5 peut comprendre un autre boitier renfermant une carte électronique, le cas échéant une pluralité de cartes électroniques connectées entre elles, intégrant l'autre module de communication 8b, le ou les capteurs de détection 5a, l'autre unité centrale de traitement secondaire 7b et l'autre source d'énergie secondaire 9b.

Par ailleurs, l'étape b/v/ du procédé selon l'invention, à partir du ou de chaque ensemble prévu pour que le ou chaque capteur de détection 5a, 5b puisse être activé ou mis en état de veille, peut consister à mettre directement ou indirectement l'émetteur/récepteur de proximité 4a, 4b en état de veille soit en agissant directement sur celui-ci, soit en agissant directement sur le ou chaque capteur de détection 5a, 5b concerné pour mettre ce ou ces derniers en état de veille. On comprendra que dans ce dernier cas où le ou chaque capteur de détection 5a, 5b est mis en état de veille, par exemple en inhibant le signal de détection émis par ce ou ces derniers, par exemple au moyen de l'unité centrale de traitement principale ou de l'une et/ou l'autre des unités de traitement secondaires, de sorte que la détection n'est plus effective, l'émetteur/récepteur de proximité 4a, 4b concerné ne peut plus être mis à l'état d'activation puisque cet état d'activation est commandé selon l'invention dès que la détection par le ou chaque capteur concerné est effective.

Dans l'étape préalable telle que définie dans la procédé et concernant l'étape de l'armement de la centrale 3 dans l'état armé, le ou chaque circuit de commande d'activation 7a, 7b peut être adapté pour envoyer, sur une durée prédéterminée grâce au(x) circuit(s) de temporisation, un ordre d'activation au lecteur 4 du ou de chaque ensemble tel que défini dans le procédé à ce titre.

De préférence, dans le ou chaque ensemble, la présente invention peut prévoir que le lecteur 4 puisse être intégré dans le détecteur 5, ce sans perturber ou empêcher le fonctionnement du détecteur. L'inverse, c'est-à-dire l'intégration du détecteur dans le lecteur risque de poser un problème de fonctionnement du détecteur qui peut mal fonctionner, voire ne plus pouvoir assurer la détection correctement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini dans les revendications.

## Revendications

1. Procédé de détection, de reconnaissance, et de désarmement automatique d'une centrale d'alarme (3) pour la surveillance d'un espace protégé (1) comprenant au moins une ouverture d'accès fermée par une porte (2), à partir d'un système d'alarme comprenant, d'une part, la centrale (3) d'alarme qui comprend une unité centrale de traitement principale (3a) et un module de communication principal (3b) et est alimentée par une source d'énergie principale autonome (3c) ou par le réseau, d'autre part, au moins un ensemble de détection et d'identification autonome relié fonctionnellement à la centrale (3) et étant associé à la ou à l'une des portes (2), le ou chaque ensemble comprenant une ou deux unités centrales de traitement secondaires (7a, 7b, 7c), un émetteur/récepteur de proximité (4a, 4b) capable d'être activé ou mis en état de veille, au moins un capteur de détection (5a, 5b) capable de détecter une ouverture de la porte (2) associée et/ou un passage à travers cette dernière, un ou deux modules de communication secondaires (8a, 8b, 8c) permettant la communication avec la centrale (3) et une ou deux sources d'énergie secondaires (9a, 9b, 9c) permettant l'autonomie énergétique du ou de chaque ensemble, et, d'autre part encore, au moins un support portable (6) de communication sans fil actif comprenant une puce de communication sans fil, telle qu'une puce Bluetooth de préférence à faible énergie, et une mémoire contenant un identifiant, le ou chaque émetteur/récepteur de proximité (4a, 4b) activé étant capable d'établir une communication sans fil avec la ou chaque puce pour permettre l'identification du support portable (6) et la reconnaissance de son identifiant par la centrale (3) qui est adaptée, selon que l'identifiant est reconnu ou non, pour, automatiquement, être désarmée ou déclencher une procédure d'alarme,
procédé **caractérisé en ce qu'**il consiste à réaliser, à partir d'une configuration où le ou chaque émetteur/récepteur de proximité (4a, 4b) est à l'état de veille et où la centrale (3) est à l'état armé ou désarmé, pour la ou chaque porte (2) concernée, les étapes a/ et b/ successives suivantes :
a/ à détecter automatiquement, à partir du ou des capteur(s) de détection (5a, 5b), une ouverture de la porte (2) et/ou un passage à travers cette dernière,
b/ suite à ladite détection, en fonction de l'état d'armement, armé ou désarmé, de la centrale (3) :
. à l'état armé :
i/ à commander l'activation de l'émetteur/récepteur de proximité (4a, 4b) concerné pour le mettre automatiquement dans un état activé permettant sa communication sans fil avec le support portable (6) concerné sur une durée prédéterminée t0,
ii/ en présence du ou de l'un des supports portables (6) dans le champ de communication radio fréquence de l'émetteur/récepteur de proximité (4a, 4b) activé, à établir la communication sans fil correspondante pour permettre l'identification du support portable (6) concerné,
iii/ à transmettre l'identifiant du support portable (6) ainsi présent à la centrale (3) qui selon l'état de reconnaissance de l'identifiant, effectue soit, lorsque celui-ci est valide, la procédure de désarmement du système soit, en absence d'identifiant valide, la procédure d'alarme, éventuellement après un délai de temporisation d'entrée,
iv/ en l'absence de support portable (6) reconnu, à commander, à l'expiration de la durée prédéterminée t0, la désactivation à l'émetteur/récepteur de proximité (4a, 4b) ainsi activé pour le mettre automatiquement à l'état de veille.
. à l'état désarmé :
v/ à maintenir automatiquement l'émetteur/récepteur de proximité (4a, 4b) à l'état de veille en agissant directement ou indirectement sur ce dernier.

2. Procédé, selon la revendication 1, **caractérisé en ce qu'**il consiste, à partir du système où, d'une part, le ou chaque ensemble consiste en un détecteur/lecteur (4, 5) intégrant l'unité centrale de traitement secondaire (7c), le module de communication secondaire (8c), l'émetteur/récepteur de proximité (4b), le ou les capteurs de détection (5b) et la source d'énergie secondaire (9c), l'unité centrale de traitement secondaire (7c) du ou de chaque ensemble étant prévue pour pouvoir commander, suite à une détection par le ou les capteurs de détection (5b), l'activation de l'émetteur/récepteur de proximité (4) du même ensemble et, d'autre part, l'unité centrale de traitement principale (3a) de la centrale (3) est adaptée pour envoyer à l'unité centrale de traitement secondaire (7c) du ou de chaque ensemble un signal d'information représentatif de ou reflétant l'état d'armement, armé ou désarmé, de la centrale (3) :
- préalablement à l'étape b/, à envoyer à l'unité centrale de traitement secondaire (7c) du ou de chaque détecteur/lecteur (4, 5), le signal d'information représentatif de l'état d'armement de la centrale (3) pour l'informer de l'état d'armement de la centrale (3),
- dans l'étape b/i/, à commander depuis l'unité centrale de traitement secondaire (7c) l'activation de l'émetteur/récepteur de proximité (4b).

3. Procédé, selon la revendication 1, **caractérisé en ce qu'**il consiste, à partir du système où l'unité centrale de traitement principale (3a) de la centrale (3) est prévue pour pouvoir commander l'activation de l'émetteur/récepteur de proximité (4a) du ou de chaque ensemble et où le ou chaque ensemble consiste, d'une part, en un lecteur (4) intégrant l'émetteur/récepteur de proximité (4a), l'une des deux unités centrales de traitement secondaires (7a), l'un des deux de modules de communication secondaires (8a) et l'une des deux sources d'énergie secondaires (9a) et, d'autre part, un détecteur (5) intégrant l'autre unité centrale secondaire (7b), l'autre module de communication secondaire (8b), le ou les capteurs de détection (5a) et l'autre source d'énergie secondaire (9b) :
- dans l'étape a/, à envoyer à la centrale (3), depuis le détecteur (5), un signal représentatif de la détection réalisée par le ou les capteurs de détection (5a) dudit détecteur (5),
- dans l'étape b/i/, à commander, depuis la centrale (3), l'activation de l'émetteur/récepteur de proximité (4a).

4. Procédé, selon l'une quelconque des revendications 1 à revendication 3, **caractérisé en ce qu'**il consiste dans l'étape b/iv/, à commander la désactivation de l'émetteur/récepteur de proximité (4a, 4b) depuis la ou l'une des unités centrales de traitement secondaire (7a, 7c) du même ensemble.

5. Procédé, selon l'une quelconque des revendications 1 à 4, **caractérisé en ce que** la centrale (3) comprend une mémoire contenant la liste des identifiants valides relatifs aux supports portables (6) et **en ce qu'**il consiste à commander, grâce au système, en réponse à l'armement de la centrale (3) dans l'état armé, préalablement à l'étape a/ définie dans la revendication 1, l'activation de l'émetteur/récepteur de proximité (4a, 4b) du ou de chaque ensemble, pour mettre automatiquement le ou chaque émetteur/récepteur de proximité (4a, 4b) dans l'état activé durant une période prédéterminée de sorte à détecter la présence éventuel d'un support portable (6) autorisé dans l'espace protégé (1), puis à commander, après une période prédéterminée, la désactivation du ou de chaque émetteur/récepteur de proximité (4a, 4b) activé de sorte à le(s) mettre en état de veille, et **en ce qu'**il consiste dans le cas d'une telle présence à inhiber temporairement le support portable (6) dans la liste des identifiants valides mémorisée dans la centrale (3) jusqu'à son prochain désarmement.

6. Procédé, selon l'une quelconque des revendications 1 à 5, **caractérisé en ce qu'**il consiste, à l'état armé et à l'état activé du ou de chaque émetteur/récepteur de proximité (4a, 4b), à partir du ou de chaque support portable (6) prévu pour émettre de façon périodique, selon un rythme prédéterminée avec un cycle de durée t1, un message de signalisation indiquant sa présence, ledit message de signalisation étant émis pour chaque cycle sur un ou plusieurs canaux de transmission (10) répétant chacun ledit message, de préférence trois canaux (10a, 10b, 10c), l'utilisation du ou de chaque canal de transmission (10a, 10b, 10c) par le ou chaque émetteur/récepteur de proximité (4a, 4b) étant effectuée sur la durée prédéterminée t0:
à définir la durée prédéterminée t0 de l'état activé du ou de chaque émetteur/récepteur de proximité (4a, 4b) par rapport à la durée t1 du cycle de sorte que la durée prédéterminée t0 soit strictement supérieure à la durée t1 du cycle.

7. Procédé, selon la revendication 6, **caractérisé en ce qu'**il consiste, dans le cas où le message de signalisation est émis sur au moins deux canaux de transmission (10) utilisés successivement selon un ordre prédéterminé par le ou chaque émetteur/récepteur de proximité (4a, 4b) et où aucune communication n'a été établie dans le premier canal de transmission (10a) utilisé, à utiliser successivement le ou les autres canaux de transmission (10b, 10c) jusqu'à ce qu'une communication soit établie ou jusqu'à ce que le dernier canal de transmission (10c) ait été utilisé par le ou chaque émetteur/récepteur de proximité (4a, 4b).

8. Procédé, selon l'une quelconque des revendications 6 à 7, **caractérisé en ce que** le rythme est défini de sorte que la durée t1 du cycle soit supérieure à 0.7 seconde et inférieure à 5 secondes et de préférence comprise entre 1.5 et 3 secondes.

9. Procédé, selon l'une quelconque des revendications 1 à 8, **caractérisé en ce que**, l'étape b/v/ tel que défini dans la revendication 1, à partir du ou de chaque ensemble prévu pour que le ou chaque capteur de détection (5a, 5b) puisse être activé ou mis en état de veille, consiste à mettre directement ou indirectement l'émetteur/récepteur de proximité (4a, 4b) en état de veille soit en agissant directement sur celui-ci, soit en agissant directement sur le ou chaque capteur de détection (5a, 5b) concerné pour mettre ce ou ces derniers en état de veille.

10. Système d'alarme, convenant à la mise en oeuvre du procédé selon l'une quelconque des revendications 1 à 9, d'identification, de reconnaissance, et de désarmement automatique d'une centrale (3) d'alarme, pour la surveillance d'un espace protégé (1) comprenant au moins une ouverture d'accès fermée par une porte (2),
système **caractérisé en ce qu'**il comprend :
- la centrale (3) d'alarme qui comprend une unité centrale de traitement principale (3a) et un module de communication principal (3b) et est alimentée par une source d'énergie principale autonome (3c) ou par le réseau,
- au moins un ensemble de détection et d'identification autonome relié fonctionnellement à la centrale (3) et étant associé à la ou à l'une des portes (2), le ou chaque ensemble comprenant une ou deux unités centrales de traitement secondaires (7a, 7b, 7c), un émetteur/récepteur de proximité (4a, 4b) capable d'être activé ou mis en état de veille, au moins un capteur de détection (5a, 5b) capable de détecter une ouverture de la porte (2) associée et/ou un passage à travers cette dernière, le cas échéant le ou chaque capteur de détection (5a, 5b) étant capable d'être automatiquement activé ou mis en état de veille, un ou deux modules de communication secondaires (8a, 8b, 8c) permettant la communication avec la centrale (3) et une ou deux sources d'énergie secondaires (9a, 9b, 9c) permettant l'autonomie énergétique du ou de chaque ensemble,
- au moins un support portable (6) de communication sans fil actif comprenant une puce de communication sans fil, telle qu'une puce Bluetooth de préférence à faible énergie, et une mémoire contenant un identifiant, le ou chaque émetteur/récepteur de proximité (4a, 4b) activé étant capable d'établir une communication sans fil avec la ou chaque puce de communication pour permettre l'identification du support portable (6) et la reconnaissance de son identifiant par la centrale (3) qui est adaptée, selon que l'identifiant est reconnu ou non, pour, automatiquement, être désarmée ou déclencher une procédure d'alarme,
et **en ce que** la centrale (3) ou, le cas échéant, le ou chaque ensemble, est prévu(e) pour permettre automatiquement, suite à la détection par le ou les capteur de détection (5a, 5b), d'une part, à l'état armé de la centrale (3), la commande de l'activation de l'émetteur/récepteur de proximité (4a, 4b) concerné, tel que défini dans l'étape b/i/ de la revendication 1, et, d'autre part, à l'état désarmé de la centrale (3), le maintien, tel que défini dans l'étape b/v/ de la revendication 1, du ou de chaque émetteur/récepteur de proximité (4a, 4b) à l'état de veille en agissant directement ou indirectement sur ce ou ces derniers, et le ou chaque ensemble comprend des moyens de temporisation permettant la commande automatique, après la durée prédéterminée t0, de la désactivation telle que définie dans l'étape b/iv/ de la revendication 1.

11. Système, selon la revendication 10, **caractérisé en ce que** le ou chaque ensemble, consiste en un détecteur/lecteur (4, 5) autonome intégrant l'unité centrale de traitement secondaire (7c), le module de communication secondaire (8c), l'émetteur/récepteur de proximité (4b), le ou les capteurs de détection (5b) et la source d'énergie secondaire (9c), **en ce que** l'unité centrale de traitement secondaire (7c) du ou de chaque ensemble est prévue pour pouvoir commander, suite à une détection par le ou les capteurs de détection (5b), l'activation de l'émetteur/récepteur de proximité (4b) telle que définie dans l'étape b/i/ de la revendication 2 et **en ce que** l'unité centrale de traitement principale (3a) de la centrale (3) est adaptée pour pouvoir envoyer, via le module de communication principale (3b) et le module de communication secondaire (8c) correspondant, à l'unité centrale de traitement secondaire (7c) du ou de chaque ensemble le signal d'information représentatif de l'état d'armement de la centrale (3) tel que défini dans la revendication 2.

12. Système, selon la revendication 11, **caractérisé en ce que** le détecteur/lecteur (4, 5) comprend un boîtier renfermant une carte électronique, le cas échéant une pluralité de cartes électroniques connectées entre elles, intégrant l'unité centrale de traitement secondaire (7c), le module de communication secondaire (8c), l'émetteur/récepteur de proximité (4b), le ou les capteurs de détection (5b) et la source d'énergie secondaire (9c).

13. Système, selon la revendication 10, **caractérisé en ce que** le ou chaque ensemble consiste, d'une part, en un lecteur (4) autonome intégrant l'émetteur/récepteur de proximité (4a), l'une des deux unités centrales de traitement secondaires (7a), l'un des deux modules de communication secondaire (8a), ce dernier étant bidirectionnel, et l'une des deux sources d'énergie secondaire (9a) et, d'autre part, en un détecteur (5) autonome intégrant l'autre module de communication (8b), le ou les capteurs de détection (5a), l'autre source d'énergie secondaire (9b) et l'autre unité centrale de traitement secondaire (7b) adaptée pour pouvoir envoyer à la centrale (3) le signal représentatif de la détection tel que défini dans l'étape a/ de la revendication 3 et **en ce que** l'unité centrale de traitement principale (3a) est prévue pour pouvoir commander, via le module de communication principal (3b) et le module de communication secondaire (8a) correspondant, l'activation de l'émetteur/récepteur de proximité (4a), telle que définie dans l'étape b/i/ de la revendication 3.

14. Système, selon la revendication 13, **caractérisé en ce que**, pour le ou chaque ensemble, le lecteur (4) comprend un boitier renfermant une carte électronique, le cas échéant une pluralité de cartes électroniques connectées entre elles, intégrant l'émetteur/récepteur de proximité (4a), l'une des deux unités centrales de traitement secondaires (7a), l'un des deux modules de communication secondaire (8a) et l'une des deux sources d'énergie (9a) et **en ce que** le détecteur (5) comprend un boitier renfermant une carte électronique, le cas échéant une pluralité de cartes électroniques connectées entre elles, intégrant l'autre module de communication (8b), le ou les capteurs de détection (5a), l'autre unité centrale de traitement secondaire (7b) et l'autre source d'énergie secondaire (9b).

## Patentansprüche

1. Verfahren zur Detektion, Erkennung, und automatischen Deaktivierung einer Alarmzentrale (3) zur Überwachung eines gesicherten Bereichs (1), der mindestens eine durch eine Tür (2) geschlossene Zugangsöffnung aufweist, durch ein Alarmsystem, bestehend aus einerseits der Alarmzentrale (3), die eine Hauptverarbeitungszentraleinheit (3a) umfasst und ein Hauptkommunikationsmodul (3b) und durch eine netzunabhängige Hauptenergiequelle (3c) oder durch das Netz versorgt wird, andererseits mindestens einer netzunabhängigen Detektions- und Identifizierungseinheit, die funktionell mit der Zentrale (3) verbunden ist und der oder einer der Türen (2) zugeordnet ist, wobei die oder jede Einheit eine oder zwei Nebenverarbeitungszentraleinheiten (7a, 7b, 7c) umfasst, einen Nahbereichssender/-empfänger (4a, 4b), in der Lage, aktiviert oder in einen Ruhezustand versetzt zu werden, mindestens einen Detektionssensor (5a, 5b), in der Lage, ein Öffnen der zugehörigen Tür (2) und/oder ein Durchschreiten der letztgenannten festzustellen, ein oder zwei Nebenkommunikationsmodule (8a, 8b, 8c), die die Kommunikation mit der Zentrale (3) erlauben, und ein oder zwei Nebenenergiequellen (9a, 9b, 9c), die die Netzunabhängigkeit der oder jeder Einheit ermöglichen, und außerdem andererseits mindestens einen tragbaren Träger (6) zur aktiven Funkkommunikation, einen Funkkommunikationschip umfassend, wie etwa einen Bluetooth-Chip, vorzugsweise geringer Energie, und einen, eine Kennung enthaltenden Speicher, wobei der oder jeder aktivierte Nahbereichssender/-empfänger (4a, 4b) in der Lage ist, eine Funkverbindung mit dem oder jedem Chip herzustellen, um die Identifizierung des tragbaren Trägers (6) und die Erkennung seiner Kennung durch die Zentrale (3) zu erlauben, die dafür eingerichtet ist, je nachdem, ob die Kennung erkannt wird oder nicht, automatisch deaktiviert zu werden oder eine Alarmprozedur auszulösen,
Verfahren, **dadurch gekennzeichnet, dass** es darin besteht, von einer Konfiguration ausgehend, in der der oder jeder Nahbereichssender/- empfänger (4a, 4b) im Ruhezustand ist und in der die Zentrale (3) im scharfgeschalteten oder deaktivierten Zustand ist, für die oder jede betroffene Tür (2) die folgenden aufeinanderfolgenden Schritte a/ und b/ auszuführen:
a/ automatische Detektion eines Öffnens der Tür (2) und/oder eines Durchschreitens der letztgenannten durch den oder die Detektionssensor(en) (5a, 5b),
b/ auf die genannte Detektion folgend, in Abhängigkeit vom Aktivierungszustand, scharfgeschaltet oder deaktiviert, der Zentrale (3):
• im scharfgeschalteten Zustand:
i/ die Aktivierung des betreffenden Nahbereichssender/- empfängers (4a, 4b) zu veranlassen, um ihn automatisch in einen aktivierten Zustand zu versetzen, der seine Funkkommunikation mit dem betreffenden tragbaren Träger (6) für eine festgelegte Zeit t0 erlaubt,
ii/ in Anwesenheit des oder eines der tragbaren Träger (6) im Funkkommunikationsbereich des aktivierten Nahbereichssenders/ - empfängers (4a, 4b) die entsprechende Funkkommunikation herzustellen, um die Identifizierung des betreffenden tragbaren Trägers (6) zu erlauben,
iii/ die Kennung des anwesenden tragbaren Trägers (6) an die Zentrale (3) zu übermitteln, die je nach dem Erkennungszustand der Kennung entweder, wenn diese gültig ist, die Deaktivierungsprozedur des Systems ausführt, oder bei Fehlen einer gültigen Kennung die Alarmprozedur, eventuell nach einer EintrittsVerzögerungszeit,
iv/ bei Abwesenheit eines erkannten tragbaren Trägers (6) nach Ablauf der festgelegten Zeit t0 die Deaktivierung des so aktivierten Nahbereichssenders/-empfängers (4a, 4b) zu veranlassen, um ihn automatisch in den Ruhezustand zu versetzen,
• im deaktivierten Zustand:
v/ den Nahbereichssender/-empfänger (4a, 4b) durch direkte oder indirekte Einwirkung auf den letztgenannten automatisch im Ruhezustand zu belassen.

2. Verfahren nach Patentanspruch 1, **dadurch gekennzeichnet, dass** es darin besteht, von dem System ausgehend, in dem einerseits die oder jede Einheit aus einem Detektor/Lesegerät (4, 5) besteht, das die Nebenverarbeitungszentrale (7c), das Nebenkommunikationsmodul (8c), den Nahbereichssender/-empfänger (4b), den oder die Detektionssensor(en) (5b) und die Nebenenergiequelle (9c) einschließt, wobei die Nebenverarbeitungszentraleinheit (7c) der oder jeder Einheit dafür vorgesehen ist, infolge einer Detektion durch den oder die Detektionssensoren (5b) die Aktivierung des Nahbereichssenders/- empfängers (4) derselben Einheit zu veranlassen, und andererseits die Hauptverarbeitungseinheit (3a) der Zentrale (3) dafür eingerichtet ist, der Nebenverarbeitungszentraleinheit (7c) der oder jeder Einheit ein Informationssignal zu senden, das den Aktivierungszustand, scharfgeschaltet oder deaktiviert, der Zentrale (3) angibt oder zeigt:
- vor dem Schritt b/ der Nebenverarbeitungszentraleinheit (7c) des oder jedes Detektor/Lesegerätes (4, 5) das Informationssignal zu senden, das den Aktivierungszustand der Zentrale (3) angibt, um sie über den Aktivierungszustand der Zentrale (3) zu informieren,
- im Schritt b/i/ von der Nebenverarbeitungszentraleinheit (7c) aus die Aktivierung des Nahbereichssender/-empfängers (4b) zu veranlassen.

3. Verfahren nach Patentanspruch 1, **dadurch gekennzeichnet, dass** es darin besteht, ausgehend von dem System, in dem die Hauptzentralverarbeitungseinheit (3a) der Zentrale (3) dafür vorgesehen ist, die Aktivierung des Nahbereichssender/-empfängers (4a) der oder jeder Einheit zu veranlassen, und in dem die oder jede Einheit einerseits aus einem Lesegerät (4) besteht, das den Nahbereichssender/-empfänger (4a), eine der beiden Nebenverarbeitungszentraleinheiten (7a), eines der beiden Nebenkommunikationsmodule (8a) und eine der beiden Nebenenergiequellen (9a) einschließt, und andererseits einem Detektor (5), der die andere Nebenverarbeitungszentraleinheit (7b) umfasst, das andere Nebenkommunikationsmodul (8b), den oder die Detektionssensor(en) (5a) und die andere Nebenenergiequelle (9b):
- im Schritt a/ der Zentrale (3) vom Detektor (5) aus ein Signal zu senden, das die von dem oder den Detektionssensor(en) (5a) des genannten Detektors (5) ausgeführte Detektion angibt,
- im Schritt b/i/ von der Zentrale (3) aus die Aktivierung des Nahbereichssender/-empfängers (4a) zu veranlassen.

4. Verfahren nach irgendeinem der Patentansprüche 1 bis 3, **dadurch gekennzeichnet, dass** es darin besteht, im Schritt b/iv/ die Deaktivierung des Nahbereichssender/-empfängers (4a, 4b) von der oder einer der Nebenverarbeitungseinheit(en) (7a, 7c) derselben Einheit aus zu veranlassen.

5. Verfahren nach irgendeinem der Patentansprüche 1 bis 4, **dadurch gekennzeichnet, dass** die Zentrale (3) einen Speicher umfasst, der die Liste der gültigen Kennungen in Bezug auf die tragbaren Träger (6) enthält, und dadurch, dass es darin besteht, dank des Systems in Reaktion auf die Aktivierung der Zentrale (3) in den scharfgeschalteten Zustand vor dem in Patentanspruch 1 definierten Schritt a/ die Aktivierung des Nahbereichssender/-empfängers (4a, 4b) der oder jeder Einheit zu veranlassen, um automatisch den oder jeden Nahbereichssender/-empfänger (4a, 4b) während einer festgelegten Zeit in den aktivierten Zustand zu versetzen, um die eventuelle Anwesenheit eines autorisierten tragbaren Trägers (6) im gesicherten Bereich (1) festzustellen, und dann nach einer festgelegten Zeit die Deaktivierung des oder jedes aktivierten Nahbereichssender/-empfängers (4a, 4b) zu veranlassen, um ihn/sie in den Ruhezustand zu versetzen, und dadurch, dass es im Fall einer derartigen Anwesenheit darin besteht, den tragbaren Träger (6) in der in der Zentrale (3) gespeicherten Liste gültiger Kennungen bis zu ihrer nächsten Deaktivierung vorübergehend zu sperren.

6. Verfahren nach irgendeinem der Patentansprüche 1 bis 5, **dadurch gekennzeichnet, dass** es darin besteht, im scharfgeschalteten Zustand und im aktivierten Zustand des oder jedes Nahbereichssenders/- empfängers (4a, 4b), von dem oder jedem tragbaren Träger (6) aus, der dafür vorgesehen ist, periodisch in einem festgelegten Rhythmus mit einer Zyklusperiode t1 eine Signalisationsmeldung auszusenden, die seine Anwesenheit anzeigt, wobei die genannte Signalisationsmeldung in jedem Zyklus auf ein oder zwei Sendekanälen (10) ausgesandt wird, die jeweils die genannte Meldung wiederholen, vorzugsweise auf drei Kanälen (10a, 10b, 10c), wobei die Verwendung des oder jedes Sendekanals (10a, 10b, 10c) durch den oder jeden Nahbereichssender/-empfänger (4a, 4b) in der festgelegten Zeit t0 erfolgt:
die festgelegte Zeit t0 des aktivierten Zustandes des oder jedes Nahbereichssenders/-empfängers (4a, 4b) relativ zur Periode t1 des Zyklus derart zu definieren, dass die festgelegte Zeit t0 strikt größer ist, als die Periode t1 des Zyklus.

7. Verfahren nach Patentanspruch 6, **dadurch gekennzeichnet, dass** es darin besteht, in dem Fall, in dem die Signalisationsmeldung auf mindestens zwei Sendekanälen (10) gesandt wird, die nacheinander in einer festgelegten Reihenfolge von dem oder jedem Nahbereichssender/- empfänger (4a, 4b) verwendet werden, und wo keinerlei Verbindung im ersten verwendeten Sendekanal (10a) hergestellt wurde, nacheinander den anderen Sendekanal oder die anderen Sendekanäle (10b, 10c) zu verwenden, bis eine Verbindung hergestellt wurde oder bis der letzte Sendekanal (10c) von dem oder jedem Nahbereichssender/-empfänger (4a, 4b) verwendet worden ist.

8. Verfahren nach irgendeinem der Patentansprüche 6 bis 7, **dadurch gekennzeichnet, dass** der Rhythmus derart definiert wird, dass die Periode t1 des Zyklus größer ist, als 0,7 Sekunden und kleiner als 5 Sekunden und vorzugsweise zwischen 1,5 und 3 Sekunden liegt.

9. Verfahren nach irgendeinem der Patentansprüche 1 bis 8, **dadurch gekennzeichnet, dass** der Schritt b/v/ in der Definition von Patentanspruch 1, von der oder jeder Einheit aus dafür vorgesehen ist, dass der oder jeder Detektionssensor (5a, 5b) aktiviert oder in den Ruhezustand versetzt werden kann, darin besteht, den Nahbereichssender/-empfänger (4a, 4b) direkt oder indirekt in die Ruhestellung zu versetzen, indem durch direkte Einwirkung auf ihn oder durch direkte Einwirkung auf den oder jeden betreffenden Detektionssensor (5a, 5b) diese(r) letztgenannte(n) in die Ruhestellung versetzt wird/werden.

10. Alarmsystem, für die Anwendung des Verfahrens nach irgendeinem der Patentansprüche 1 bis 9 geeignet, zur Identifizierung, Erkennung, und automatischen Deaktivierung einer Alarmzentrale (3) zur Überwachung eines gesicherten Bereichs (1), der mindestens eine durch eine Tür (2) geschlossene Zugangsöffnung aufweist,
System, **dadurch gekennzeichnet, dass** es enthält:
- die Alarmzentrale (3), die eine Hauptverarbeitungszentraleinheit (3a) umfasst und ein Hauptkommunikationsmodul (3b) und durch eine netzunabhängige Hauptenergiequelle (3c) oder durch das Netz versorgt wird,
- mindestens eine netzunabhängige Detektions- und Identifizierungseinheit, die funktionell mit der Zentrale (3) verbunden ist und der oder einer der Türen (2) zugeordnet ist, wobei die oder jede Einheit eine oder zwei Nebenverarbeitungszentraleinheiten (7a, 7b, 7c) umfasst, einen Nahbereichssender/-empfänger (4a, 4b), in der Lage, aktiviert oder in einen Ruhezustand versetzt zu werden, mindestens einen Detektionssensor (5a, 5b), in der Lage, ein Öffnen der zugehörigen Tür (2) und/oder ein Durchschreiten der letztgenannten festzustellen, wobei gegebenenfalls der oder jeder Detektionssensor (5a, 5b) in der Lage ist, automatisch aktiviert oder in einen Ruhezustand versetzt zu werden, ein oder zwei Nebenkommunikationsmodule (8a, 8b, 8c), die die Kommunikation mit der Zentrale (3) erlauben, und ein oder zwei Nebenenergiequellen (9a, 9b, 9c), die die Netzunabhängigkeit der oder jeder Einheit ermöglichen,
- mindestens einen tragbaren Träger (6) zur aktiven Funkkommunikation, einen Chip zur Funkkommunikation umfassend, wie etwa einen Bluetooth-Chip, vorzugsweise geringer Energie, und einen, eine Kennung enthaltenden Speicher, wobei der oder jeder aktivierte Nahbereichssender/-empfänger (4a, 4b) in der Lage ist, eine Funkverbindung mit dem oder jedem Chip herzustellen, um die Identifizierung des tragbaren Trägers (6) und die Erkennung seiner Kennung durch die Zentrale (3) zu erlauben, die dafür eingerichtet ist, je nachdem, ob die Kennung erkannt wird oder nicht, automatisch deaktiviert zu werden oder eine Alarmprozedur auszulösen,
dadurch, dass die Zentrale (3) oder gegebenenfalls die oder jede Einheit, dafür vorgesehen ist, automatisch auf die genannte Detektion durch den oder die Detektionssensor(en) (5a, 5b) folgend, einerseits im scharfgeschalteten Zustand die Aktivierung des betreffenden Nahbereichssenders/-empfängers (4a, 4b) zu veranlassen, wie im Schritt b/i/ des Patentanspruches 1 definiert, und andererseits im deaktivierten Zustand der Zentrale (3), entsprechend dem Schritt b/v/ des Patentanspruches 1, den oder jeden Nahbereichssender/-empfänger (4a, 4b) durch direkte oder indirekte Einwirkung auf den/die letztgenannten automatisch im Ruhezustand zu halten, und dass die oder jede Einheit Verzögerungsmittel umfasst, die erlauben, nach der festgelegten Zeit t0 die Deaktivierung, wie sie in Schritt b/iv/ des Patentanspruches 1 definiert ist, automatisch zu veranlassen.

11. System nach Patentanspruch 10, **dadurch gekennzeichnet, dass** die oder jede Einheit aus einem netzunabhängigen Detektor/ Lesegerät (4, 5) besteht, das die Nebenverarbeitungszentraleinheit (7c), das Nebenkommunikationsmodul (8c), den Nahbereichssender/-empfänger (4b), den oder die Detektionssensor(en) (5b) und die Nebenenergiequelle (9c) einschließt, dadurch, dass die Nebenverarbeitungszentrale (7c) der oder jeder Einheit dafür vorgesehen ist, infolge einer Detektion durch den oder die Detektionssensoren (5b) die Aktivierung des Nahbereichssenders/ - empfängers (4b), wie in Schritt b/i/ des Patentanspruches 2 definiert, zu veranlassen, und dadurch, dass die Hauptverarbeitungseinheit (3a) der Zentrale (3) dafür eingerichtet ist, über das Hauptkommunikationsmodul (3b) und das entsprechende Nebenkommunikationsmodul (8c) der Nebenverarbeitungszentraleinheit (7c) der oder jeder Einheit das in Patentanspruch 2 definierte Informationssignal zu senden, das den Aktivierungszustand der Zentrale (3) angibt.

12. System nach Patentanspruch 11, **dadurch gekennzeichnet, dass** das Detektor/Lesegerät (4, 5) ein Gehäuse umfasst, das eine gedruckte Schaltung, gegebenenfalls mehrere miteinander verbundene gedruckte Schaltungen, enthält, die die Nebenverarbeitungszentrale (7c), das Nebenkommunikationsmodul (8c), den Nahbereichssender/-empfänger (4b), den oder die Detektionssensoren (5b) und die Nebenenergiequelle (9c) enthält/enthalten.

13. System nach Patentanspruch 10, **dadurch gekennzeichnet, dass** die oder jede Einheit einerseits aus einem netzunabhängigen Lesegerät (4) besteht, das den Nahbereichssender/-empfänger (4a) einschließt, eine der beiden Nebenverarbeitungszentraleinheiten (7a), eines der beiden bidirektionalen Nebenkommunikationsmodule (8a) und eine der beiden Nebenenergiequellen (9a), und andererseits aus einem netzunabhängigen Detektor (5), der das andere Nebenkommunikationsmodul (8b) umfasst, den oder die Detektionssensor(en) (5a), die andere Nebenenergiequelle (9b) und die andere Nebenverarbeitungszentraleinheit (7b), dafür eingerichtet, der Zentrale (3) das im Schritt a/ des Patentanspruches 3 definierte, die Detektion angebende Signal zu senden, und dadurch, dass die Hauptverarbeitungszentraleinheit (3a) dafür vorgesehen ist, über das Hauptkommunikationsmodul (3b) und das entsprechende Nebenkommunikationsmodul (8a) die Aktivierung des Nahbereichssender/- empfängers (4a) zu veranlassen, wie im Schritt b/i/ des Patentanspruches 3 definiert.

14. System nach Patentanspruch 13, **dadurch gekennzeichnet, dass** für die oder jede Einheit das Lesegerät (4) ein Gehäuse umfasst, das eine gedruckte Schaltung, gegebenenfalls mehrere miteinander verbundene gedruckte Schaltungen, enthält, die den Nahbereichssender/-empfänger (4a), eine der beiden Nebenverarbeitungszentraleinheiten (7a), eins der beiden Nebenkommunikationsmodule (8a) und eine der beiden Nebenenergiequellen (9a) enthält/enthalten, und dadurch, dass der Detektor (5) ein Gehäuse umfasst, das eine gedruckte Schaltung, gegebenenfalls mehrere miteinander verbundene gedruckte Schaltungen, enthält, die das andere Nebenkommunikationsmodul (8b), den oder die Detektionssensor(en) (5a), die andere Nebenverarbeitungszentraleinheit (7b) und die andere Nebenenergiequelle (9b) umfasst/umfassen.

## Claims

1. Method for detecting, recognizing, and automatically disarming an alarm control unit (3) for monitoring a secure space (1) comprising at least one access opening that is closed by a door (2), using an alarm system comprising, on the one hand, the alarm control unit (3) that comprises a main central processing unit (3a) and a main communication module (3b) and is supplied by an autonomous main power source (3c) or by the grid, on the other hand, at least one autonomous detection and identification assembly that is connected operationally to the control unit (3) and that is associated to the door or to one of the doors (2), the or each assembly comprising one or two secondary central processing units (7a, 7b, 7c), a proximity transmitter/receiver (4a, 4b) capable of being activated or put on standby, at least one detection sensor (5a, 5b) able to detect an opening of the associated door (2) and/or a passage through the latter, one or two secondary communication modules (8a, 8b, 8c) making possible the communication with the control unit (3) and one or two secondary power sources (9a, 9b, 9c) making possible the power autonomy of the or of each assembly, and also on the other hand, at least one active wireless communication portable medium (6) comprising a wireless communication chip, such as a Bluetooth chip preferably of low power, and a memory containing an identifier, the or each activated proximity transmitter/receiver (4a, 4b) being able to establish a wireless communication with the or each chip to make possible the identification of the portable medium (6) and the recognition of its identifier by the control unit (3) that is designed, depending on whether the identifier is recognized or not, automatically to be disarmed or to trigger an alarm procedure,
the method being **characterised in that** it consists of implementing the following consecutive steps a/ and b/, based on a configuration where the or each proximity transmitter/receiver (4a, 4b) is in a standby state and where the control unit (3) is in the armed or disarmed state, for the or each door (2) in question,
a/ automatically detecting, using the detection sensor(s) (5a, 5b), an opening of the door (2) and/or a passage through the latter,
b/ following said detection, depending on the arming state, armed or disarmed, of the control unit (3):
in the armed state:
i/ controlling the activation of the proximity transmitter/receiver (4a, 4b) in question to put it automatically in an activated state enabling it to communicate wirelessly with the portable medium (6) in question over a predetermined time period t0,
ii/ in the presence of the portable medium or of one of the portable media (6) in the radio frequency communication field of the activated proximity transmitter/receiver (4a, 4b), establishing the corresponding wireless communication to make possible the identification of the portable medium (6) in question,
iii/ transmitting the identifier of the portable medium (6) that is thus present to the control unit (3) that, depending on the recognition status of the identifier, performs either, when it is valid, the procedure for disarming the system or, in the absence of a valid identifier, the alarm procedure, optionally after an entry timing delay,
iv/ in the absence of a recognized portable medium (6), controlling, at the expiration of the predetermined time t0, the deactivation of the thus activated proximity transmitter/receiver (4a, 4b) to put it automatically in the standby state.
in the disarmed state:
v/ automatically keeping the proximity transmitter/receiver (4a, 4b) in the standby state by acting directly or indirectly on the latter.

2. Method according to claim 1, **characterised in that** based on the system where, on the one hand, the or each assembly comprises a detector/reader (4, 5) incorporating the secondary central processing unit (7c), the secondary wireless communication module (8c), the proximity transmitter/receiver (4b), the detection sensor(s) (5b) and the secondary power source (9c), the secondary central processing unit (7c) of the or of each assembly being designed to be able to control, following a detection by the detection sensor(s) (5b), the activation of the proximity transmitter/receiver (4) of the same assembly and, on the other hand, the main central processing unit (3a) of the control unit (3) is designed to send to the secondary central processing unit (7c) of the or of each assembly an information signal representing or reflecting the arming state, armed or disarmed, of the control unit (3), comprising:
- prior to step b/, sending to the secondary central processing unit (7c) of the or of each detector/reader (4, 5), the information signal representing the arming state of the control unit (3) to inform it of the arming state of the control unit (3),
- in step b/ i/, controlling from the secondary central processing unit (7c) the activation of the proximity transmitter/receiver (4b).

3. Method according to claim 1, **characterised in that** based on the system where the main central processing unit (3a) of the control unit (3) is designed to be able to control the activation of the proximity transmitter/receiver (4a) of the or of each assembly and where the or each assembly comprises, on the one hand, of a reader (4) incorporating the proximity transmitter/receiver (4a), one of the two secondary central processing units (7a), one of the two secondary communication modules (8a) and one of the two secondary power sources (9a) and, on the other hand, a detector (5) incorporating the other secondary central unit (7b), the other secondary communication module (8b), the detection sensor(s) (5a) and the other secondary power source (9b), comprising:
- in step a/, sending to the control unit (3), from the detector (5), a signal representing the detection performed by the detection sensor(s) (5a) of said detector (5),
- in step b/ i/, controlling, from the control unit (3), the activation of the proximity transmitter/receiver (4a).

4. Method according to any one of claims 1 to claim 3, **characterised in that** it consists in step b/ iv/ of controlling the deactivation of the proximity transmitter/receiver (4a, 4b) from the or one of the secondary central processing units (7a, 7c) of the same assembly.

5. Method according to any one of claims 1 to 4, **characterised in that** the control unit (3) comprises a memory containing the list of valid identifiers relative to the portable media (6) and wherein the method comprises controlling, using the system, in response to the arming of the control unit (3) in the armed state, prior to step a/, the activation of the proximity transmitter/receiver (4a, 4b) of the or of each assembly, automatically to put the or each proximity transmitter/receiver (4a, 4b) in the activated state during a predetermined time so as to detect the possible presence of a portable medium (6) that is authorized in the secure space (1), then in controlling, after a predetermined time, the deactivation of the or of each activated proximity transmitter/receiver (4a, 4b) so as to put it (them) in a standby state, and in the case of such a presence, temporarily suppressing the portable medium (6) in the list of valid identifiers stored in the control unit (3) until it is next disarmed.

6. Method according to any one of claims 1 to 5, **characterised in that** in the armed state and in the activated state of the or of each proximity transmitter/receiver (4a, 4b), using the or each portable medium (6) designed to transmit periodically, according to a predetermined timing with a cycle of time period t1, a signalling message indicating its presence, said signalling message being transmitted for each cycle on one or more transmitting channels (10) each repeating said message, preferably three channels (10a, 10b, 10c), the use of the or of each transmitting channel (10a, 10b, 10c) by the or each proximity transmitter/receiver (4a, 4b) being performed over the predetermined time period t0, comprising:
- defining the predetermined time period t0 of the activated state of the or of each proximity transmitter/receiver (4a, 4b) in relation to the time period t1 of the cycle so that the predetermined time t0 is strictly greater than the time t1 of the cycle.

7. Method according to claim 6, **characterised in that** in the case where the signalling message is transmitted on at least two transmitting channels (10) that are used consecutively in a predetermined order by the or each proximity transmitter/receiver (4a, 4b) and where no communication has been established in the first transmitting channel (10a) used, the method comprises using consecutively the other transmitting channel(s) (10b, 10c) until a communication is established or until the last transmitting channel (10c) has been used by the or each proximity transmitter/receiver (4a, 4b).

8. Method according to any one of claims 6 to 7, **characterised in that** the timing is defined so that the time period t1 of the cycle is greater than 0.7 second and less than 5 seconds and preferably between 1.5 and 3 seconds.

9. Method according to any one of claims 1 to 8, **characterised in that** step b/ v/, as defined in claim 1, using the or each assembly configured for the or each detection sensor (5a, 5b) to be able to be activated or put in the standby state, comprises putting the proximity transmitter/receiver (4a, 4b) directly or indirectly in the standby state either by acting directly on it, or by acting directly on the or each detection sensor (5a, 5b) in question to put the latter in the standby state.

10. Alarm system, suitable for implementing the method according to any one of claims 1 to 9, for identifying, recognizing, and automatically disarming an alarm control unit (3), for monitoring a secure space (1) comprising at least one access opening that is closed by a door (2),
wherein the system is **characterised in that** it comprises:
- the alarm control unit (3) that comprises a main central processing unit (3a) and a main communication module (3b) and is supplied by an autonomous main power source (3c) or by the grid,
- at least one autonomous detection and identification assembly that is connected operationally to the control unit (3) and that is associated with the door or with one of the doors (2), the or each assembly comprising one or two secondary central processing units (7a, 7b, 7c), a proximity transmitter/receiver (4a, 4b) capable of being activated or put on standby, at least one detection sensor (5a, 5b) able to detect an opening of the associated door (2) and/or a passage through the latter, if applicable the or each detection sensor (5a, 5b) being capable of being automatically activated or put on standby, one or two secondary communication modules (8a, 8b, 8c) making possible the communication with the control unit (3) and one or two secondary power sources (9a, 9b, 9c) making possible the power autonomy of the or of each assembly,
- at least one active wireless communication portable medium (6) comprising a wireless communication chip, such as a Bluetooth chip preferably of low power, and a memory containing an identifier, the or each activated proximity transmitter/receiver (4a, 4b) being able to establish a wireless communication with the or each communication chip to make possible the identification of the portable medium (6) and the recognition of its identifier by the control unit (3) that is designed, depending on whether the identifier is recognized or not, automatically to be disarmed or to trigger an alarm procedure,
and wherein the control unit (3) or, if applicable, the or each assembly, is designed, following the detection by the detection sensor(s) (5a, 5b), on the one hand, in the armed state of the control unit (3), automatically to make it possible to control the activation of the proximity transmitter/receiver (4a, 4b) in question, as defined in step b/ i/, and, on the other hand, in the disarmed state of the control unit (3), automatically to make it possible to keep, as defined in step b/ v/, the or each proximity transmitter/receiver (4a, 4b) in the standby state by acting directly or indirectly on the latter, and the or each assembly comprises time-delay means that make it possible to control automatically, after the predetermined time t0, the deactivation as defined in step b/ iv/ of claim 1.

11. System according to claim 10, **characterised in that** the or each assembly comprises an autonomous detector/reader (4, 5) incorporating the secondary central processing unit (7c), the secondary communication module (8c), the proximity transmitter/receiver (4b), the detection sensor(s) (5b) and the secondary power source (9c), wherein the secondary central processing unit (7c) of the or of each assembly is designed to be able to control, following a detection by the detection sensor(s) (5b), the activation of the proximity transmitter/receiver (4b) and wherein the main central processing unit (3a) of the control unit (3) is designed to be able to send, via the main communication module (3b) and the corresponding secondary communication module (8c), to the secondary central processing unit (7c) of the or of each assembly an information signal representing or reflecting the arming state, armed or disarmed, of the control unit (3) as defined in claim 2.

12. System according to claim 11, **characterised in that** the detector/reader (4, 5) comprises a case containing an electronic board, if applicable a plurality of electronic boards connected to one another, incorporating the secondary central processing unit (7c), the secondary communication module (8c), the proximity transmitter/receiver (4b), the detection sensor(s) (5b) and the secondary power source (9c).

13. System according to claim 10, **characterised in that** the or each assembly comprises, on the one hand, an autonomous reader (4) incorporating the proximity transmitter/receiver (4a), one of the two secondary central processing units (7a), one of the two secondary communication modules (8a), the latter being bidirectional, and one of the two secondary power sources (9a) and, on the other hand, an autonomous detector (5) incorporating the other communication module (8b), the detection sensor(s) (5a), the other secondary power source (9b) and the other secondary central processing unit (7b) configured to be able to send to the control unit (3) the signal representing the detection as defined in step a/, and wherein the main central processing unit (3a) is configured to be able to control, via the main communication module (3b) and the corresponding secondary communication module (8a), the activation of the proximity transmitter/receiver (4a), as defined in step b/ i/ of claim 3.

14. System according to claim 13, **characterised in that** for the or each assembly, the reader (4) comprises a case containing an electronic board, if applicable a plurality of electronic boards connected to one another, incorporating the proximity transmitter/receiver (4a), one of the two secondary central processing units (7a), one of the two secondary communication modules (8a), and one of the two power sources (9a), and wherein the detector (5) comprises a case containing an electronic board, if applicable a plurality of electronic boards that are connected to one another, incorporating the other communication module (8b), the detection sensor(s) (5a), the other secondary central processing unit (7b), and the other secondary power source (9b).
